Europäisches Patentamt

European Patent Office

Office européen des brevets

(19)

(11) Numéro de publication : **0 213 973 B1**

## (12) FASCICULE DE BREVET EUROPEEN

(45) Date de publication du fascicule du brevet :
**23.01.91 Bulletin 91/04**

(51) Int. Cl.⁵ : **H04N 9/78**

(21) Numéro de dépôt : **86401264.6**

(22) Date de dépôt : **10.06.86**

(54) Procédé de séparation des signaux de luminance et de chrominance d'un signal vidéo composite PAL ou SECAM, et dispositif pour la mise en oeuvre de ce procédé.

(30) Priorité : **11.06.85 FR 8508811**

(43) Date de publication de la demande :
**11.03.87 Bulletin 87/11**

(45) Mention de la délivrance du brevet :
**23.01.91 Bulletin 91/04**

(84) Etats contractants désignés :
**AT BE CH DE FR GB IT LI LU NL SE**

(56) Documents cités :
**US-A- 4 050 084**
**PATENTS ABSTRACTS OF JAPAN, vol. 5, no. 23 (E-45)[695], 12 février 1981; & JP-A-55 150 688**

(73) Titulaire : **THOMSON GRAND PUBLIC**
**74, rue du Surmelin**
**F-75020 Paris (FR)**

(72) Inventeur : **Travert, Serge**
**THOMSON-CSF SCPI 19, avenue de Messine**
**F-75008 Paris (FR)**

(74) Mandataire : **Lincot, Georges et al**
**THOMSON-CSF SCPI**
**F-92045 PARIS LA DEFENSE CEDEX 67 (FR)**

**Description**

L'invention concerne un procédé de séparation de signaux de luminance et de chrominance d'un signal vidéo composite PAL ou SECAM et un dispositif pour la mise en oeuvre de ce procédé. Elle trouve son application dans les récepteurs de télévision en standards PAL ou SECAM, ainsi que dans tout équipement de télévision où s'effectue la séparation des signaux de luminance et de chrominance à partir d'un signal vidéo composite.

Dans tous les systèmes de télévision en couleur il est prévu un circuit de séparation qui, à partir du signal vidéo composite, fournit le signal de luminance qui représente l'intensité lumineuse en chaque point de l'image ainsi que le signal de chrominance qui représente la couleur d'un point ou d'un groupe de points.

Dans le procédé SECAM cette séparation est effectuée au moyen de filtres analogiques. Le filtre restituant la sous-porteuse de chrominance est appelé filtre en "cloche" par allusion à la forme de sa courbe de gain en fonction de la fréquence. Le filtre fournissant le signal de luminance est appelé rejecteur de sous-porteuse de chrominance car il élimine cette sous-porteuse dont la fréquence est généralement de 4,286 MHz. Ce procédé de séparation comporte un certain nombre d'inconvénients. D'une part, la séparation est imparfaite et donne lieu aux phénomènes de diaphonies chromatiques connus sous les vocables de "cross-colour" et de "cross-luminance" dans la littérature anglo saxonne et d'autre part, la restitution de l'information de luminance présente dans le signal vidéo composite est perdue aux fréquences qui sont éliminées par le filtre réjecteur de sous-porteuse de chrominance. Enfin ce dispositif est sujet, comme tout dispositif de type analogique, à des problèmes de réglage et d'instabilité.

Il a été proposé, pour le procédé SECAM, un circuit de séparation des signaux de luminance et de chrominance mettant en oeuvre le procédé analogique classique exposé ci-dessus par des moyens de traitement numérique. que. Un tel circuit est décrit dans la (demande de brevet FR-A-2504766 déposée au nom de la Société THOMSON-BRANDT) et les améliorations obtenues sont limitées à celles qu'apportent les techniques numériques par rapport aux techniques analogiques à savoir absence de réglage, stabilité, insensibilité au bruit.

La méthode classique utilisée pour séparer les signaux de luminance et de chrominance dans le procédé PAL est identique à la méthode utilisée dans le procédé SECAM. A partir du signal vidéo composite analogique le signal de luminance est extrait en atténuant le signal de chrominance situé dans la partie haute du spectre du signal composite tandis que le signal de chrominance est obtenu en sélectionnant la partie haute du spectre du signal composite par un filtre passe-bande. Ces deux opérations de filtrage sont mises en oeuvre au moyen de techniques analogiques et les inconvénients constatés sont ceux déjà signalés dans le cas du procédé SECAM.

Il a été proposé dans le cadre du procédé PAL un certain nombre de techniques alternatives de séparation des signaux de luminance et de chrominance dont le principe commun consiste à effectuer un filtrage en peigne vertical sur le signal vidéo composite du type de celui qui est décrit par exemple dans les demandes de brevets européennes EP-A-0103128 EP-A-0100967 déposés au nom de TOKYO SHIBAURA DENKI KABUSHIKI KAISHA). Ces techniques tirent profit du fait qu'en PAL les signaux de chrominance sont en opposition de phase lorsqu'un décalage de deux lignes est effectué sur une même trame. Ils permettent d'éliminer les phénomènes de "cross-colour" et de "cross-luminance" précités et de restituer l'information de luminance haute-fréquence dans les zones de l'image ne contenant pas de transitions verticales. Dans les voisinages de transitions verticales, il apparait par contre des fausses couleurs et des décalages de transition.

Eventuellement, une solution connue de la demande de brevet japonais JP.A.55 150-688 peut permettre dans certains cas d'éliminer le phénomène de "cross colour" mais cette solution ne parait pas satisfaisante pour régler les problèmes de transition sur les contours de l'image ou dues au mouvement dans l'image.

La présente invention se propose de remédier aux phénomènes de "cross-colour" et de "cross-luminance" précités et à la perte de l'information de luminance haute-fréquence dans les zones d'images ne présentant ni transitions verticales fortes, ni transitions en mouvement de vitesse moyenne ou grande, tout en n'introduisant pas de dégradations supplémentaires au voisinage des transitions verticales marquées et des transitions en mouvement de vitesse moyenne ou grande.

A cet effet, l'invention a pour objet, un procédé de séparation de signaux de luninance et de chrominance d'un signal vidéo composite PAL ou SECAM caractérisé en ce qu'il consiste :

    – à échantillonner et numériser un signal vidéocomposite PAL ou SECAM ;

    – à déterminer par une première voie de traitement un signal de luminance et un signal de chrominance à partir de l'échantillon numérique du point courant de l'image, et d'un échantillon antérieur homologue au point courant situé sur la ligne dans la trame précédente qui est positionnée spatialement dans l'image immédiatement au-dessous de la ligne courante ;

    – à déterminer par une seconde voie de traitement un signal de luminance et un signal de chrominance en appliquant le signal composite numérique à l'entrée respectivement d'un filtre de luminance et d'un filtre de chrominance ;

– à choisir les signaux de luminance et de chrominance présents en sortie de la première voie de traitement ou de la seconde voie de traitement en fonction d'une analyse du contexte spatio-temporel local du point par une détection de contour ou de mouvement faite par une analyse de luminance du point courant.

L'invention a également pour objet un dispositif de séparation de signaux de luminance et de chrominance d'un signal vidéocomposite PAL ou SECAM caractérisé en ce qu'il comprend :

– des moyens d'échantillonnage et de numérisation du signal vidéocomposite analogique PAL ou SECAM ;

– un dispositif à retard pour retarder de la durée d'environ une trame chaque échantillon numérique fourni par les moyens d'échantillonnage et de numérisation ;

– une première voie d'extraction des signaux de luminance et de chrominance à partir, des échantillons numériques fournis par les moyens d'échantillonnage et de numérisation et des échantillons numériques fournis par le dispositif à retard ;

– une seconde voie d'extraction des signaux de luminance et de chrominance comportant un filtre de luminance et un filtre de chrominance pour filtrer le signal vidéo composite numérique fourni par les moyens d'échantillonnage et de numérisation ;

– un moyen de sélection délivrant en sortie du dispositif de séparation les signaux élaborés par l'une ou l'autre des voies d'extraction des signaux de luminance et de chrominance ;

– et un moyen de commande pour élaborer des signaux de commande du moyen de sélection par une détection de contour ou de mouvement faite par une analyse de luminance du point courant.

Outre le fait que l'invention remédie aux phénomènes de "cross-colour" et de "cross-luminance" et de perte d'information de luminance haute-fréquence, les techniques numériques employées dans la mise en oeuvre de l'invention apportent les avantages connus des techniques numériques sur les techniques analogiques. Egalement l'invention a pour avantage qu'elle permet de réaliser de manière identique la séparation des signaux de luminance et de chrominance à partir d'un signal vidéo composite PAL ou SECAM.

Ses avantages résultent des considérations suivantes.

Soit en effet deux lignes de télévision balayées avec un décalage temporel valant 312 fois la durée d'une ligne de télévision, appelés ci-après ligne n et ligne n-312, la ligne n-312 étant située dans la trame précédant la trame de la ligne n, immédiatement au-dessous de la ligne n et soit $Y_0$, $C_0$ et $S_0$ les signaux de luminance, de chrominance et composite le long de la ligne n-312, et $Y_1$, $C_1$ et $S_1$ les mêmes signaux le long de la ligne n. Ces signaux sont liés par les relations :

$$S_1 = Y_1 + C_1 \text{ et } S_0 = Y_0 + C_0.$$

Tant en PAL qu'en SECAM, en l'absence de transition verticale ou de transition en mouvement entre les lignes n-312 et n, les signaux $Y_1$ et $Y_0$ sont identiques et les signaux $C_1$ et $C_0$ sont en opposition de phase.

$$Y_1 = Y_0 \quad C_1 = -C_0$$

Les signaux de luminance $\hat{Y}_{1A}$ et de chrominance $\hat{C}_{1A}$ le long de la ligne n peuvent dans ces conditions être estimés à partir des signaux composites $S_1$ et $S_0$ en mettant en oeuvre les opérations suivantes :

$$\hat{C}_{1A} = \frac{1}{2}(S_1 - S_0) = \frac{1}{2}(C_1 - C_0) + \frac{1}{2}(Y_1 - Y_0)$$

et

$$\hat{Y}_{1A} = S_1 - \hat{C}_{1A} = \frac{1}{2}(Y_1 + Y_0) + \frac{1}{2}(C_1 + C_0)$$

Mais comme cette estimation devient inacceptable dès lors que $Y_1$ et $C_1$ diffèrent sensiblement de $Y_0$ et $-C_0$ respectivement, ce qui se produit en présence d'une transition verticale ou d'une transition en mouvement entre les lignes n-312 et n le procédé et le dispositif selon l'invention présentent l'avantage qu'ils permettent de valider les estimations $\hat{C}_{1A}$ et $\hat{Y}_{1A}$ que lorsque la différence de luminance entre les lignes n-312 et n reste inférieure à un certain seuil et, dans certains cas où cette condition n'est pas réalisée, ils permettent d'estimer une valeur de luminance $\hat{Y}_{1A}$ au point traité à partir des valeurs de luminance déjà déterminées dans un voisinage spatio-temporel du point et en fonction d'une analyse du contexte spatio-temporel local du point traité, cette analyse résultant d'une détection/estimation de contour et/ou une détection/estimation de mouvement en considérant, par exemple, les valeurs de luminance respectives du point précédant le point courant traité de la même ligne et celles des points d'une trame précédante entrelacée, situées respectivement au-dessus et au-dessous du point courant, sur deux lignes consécutives. Le signal de chrominance $\hat{C}_{1A}$ au point traité est obtenu dans ce cas en soustrayant le signal de luminance estimé du signal composite reçu :

$$\hat{C}_{1A} = S_1 - \hat{Y}_{1A}$$

Dans d'autres cas, où les amplitudes des signaux de luminance et de chrominance varient assez fortement entre les lignes n-312 et n et où l'analyse du contexte spatio-temporel du point traité ne permet pas d'obtenir une estimation satisfaisante de la luminance en ce point, les signaux de luminance $\hat{Y}_{1B}$ et de chrominance $\hat{C}_{1B}$ sont estimés en filtrant le signal vidéo composite $S_1$ au moyen d'un filtre de luminance et d'un filtre de chrominance réalisés par des techniques numériques.

D'autres caractérisques et avantages de l'invention apparaitront à l'aide de la description qui va suivre faite au regard des dessins annexés qui représentent :

     – la figure 1 un schéma d'un mode de réalisation du circuit de séparation des signaux de luminance et de chrominance selon l'invention ;

     – la figure 2 un schéma d'un mode de réalisation simplifié du circuit de séparation selon l'invention ;

     – la figure 3 un schéma d'une autre réalisation simplifiée de l'invention ;

     – les figures 4 et 5 deux variantes d'exécution de l'invention ;

     – la figure 6 un schéma plus détaillé d'une partie des réalisations présentées en figures 2 et 3.

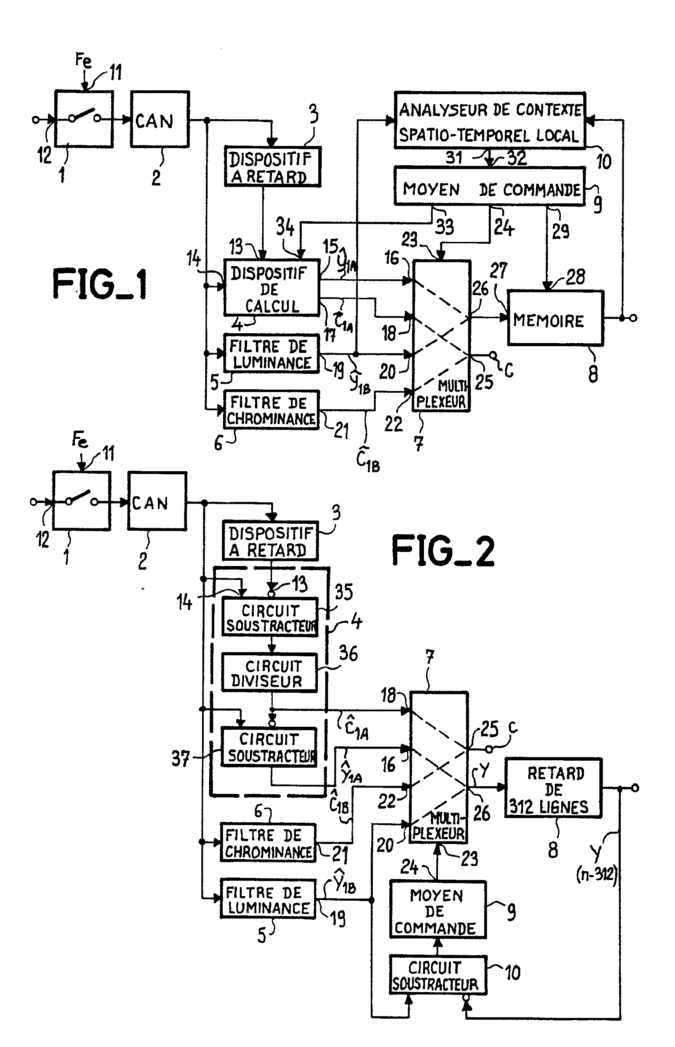

Le circuit de séparation des signaux de luminance et de chrominance selon l'invention qui est représenté à la figure 1, comprend un circuit échantillonneur 1, un convertisseur analogique numérique 2, un dispositif à retard 3, un dispositif de calcul 4, un filtre de luminance 5, un filtre de chrominance 6, un multiplexeur 7, une mémoire 8, des moyens de commande 9 et un analyseur de contexte spatio-temporel local 10.

Le circuit échantillonneur 1 possède une entrée d'horloge 11 sur laquelle est appliquée un signal d'horloge de fréquence $F_e$ et une entrée analogique 12 sur laquelle est appliquée le signal vidéocomposite PAL et SECAM.

La sortie du circuit échantillonneur 1 est connectée à une entrée du convertisseur analogique numérique 2.

Le dispositif à retard 3 est relié à la sortie du convertisseur analogique numérique 2 et retarde les signaux fournis par le convertisseur analogique numérique 2 d'une durée correspondant à une durée de balayage d'une trame de 312 lignes dans les standards PAL ou SECAM. La sortie du dispositif à retard 3 est reliée à une première entrée 13 du dispositif de calcul 4 dont une deuxième entrée 14 est reliée à la sortie du convertisseur analogique numérique 2 et une troisième entrée est reliée à la sortie des moyens de commande 9. Le dispositif de calcul 4 fournit sur une première sortie 15 une estimation du signal de luminance $\hat{Y}_{1A}$ et applique l'estimation $\hat{Y}_{1A}$ sur une première entrée 16 du multiplexeur 7 et fournit sur une deuxième sortie 17 une estimation du signal de chrominance $\hat{C}_{1A}$ qui est appliquée sur une deuxième entrée 18 du multiplexeur 7.

Le filtre de luminance 5 est relié à la sortie du convertisseur analogique numérique 2 et fournit sur sa sortie 19 une estimation $\hat{Y}_{1B}$ du signal de luminance qui est appliquée sur une troisième entrée 20 du multiplexeur 7.

Le filtre de chrominance 6 est également relié par son entrée à la sortie du convertisseur analogique numérique 2 et fournit sur une sortie 21 une estimation du signal de chrominance $\hat{C}_{1B}$ qui est appliquée sur une quatrième entrée 22 du multiplexeur 7.

Le multiplexeur 7 est commandé sur une entrée de commande 23 par une sortie 24 du moyen de commande 9, et fournit sur une sortie 25 un signal de chrominance C prélevé soit à la sortie 17 du dispositif de calcul 4 soit à la sortie 21 du filtre de chrominance 6. Egalement le multiplexeur 7 fournit sur une sortie 26 un signal de luminance Y prélevé soit à la sortie 15 du dispositif de calcul 4 soit à la sortie 19 du filtre de luminance 5.

La sortie 26 du multiplexeur 7 est reliée à une première entrée d'adressage 27 de la mémoire 8 qui est commandée sur une entrée de commande 28 par une sortie 29 du moyen de commande 9.

L'analyseur de contexte spatio-temporel local 10 possède une première entrée qui est reliée à la sortie de la mémoire 8 et une deuxième entrée qui est reliée à la sortie 19 du filtre de luminance 5, il fournit sur une sortie 31 un signal d'état du contexte spatio-temporel de chaque point d'image traité et applique le signal d'état obtenu sur une entrée 32 des moyens de commande 9.

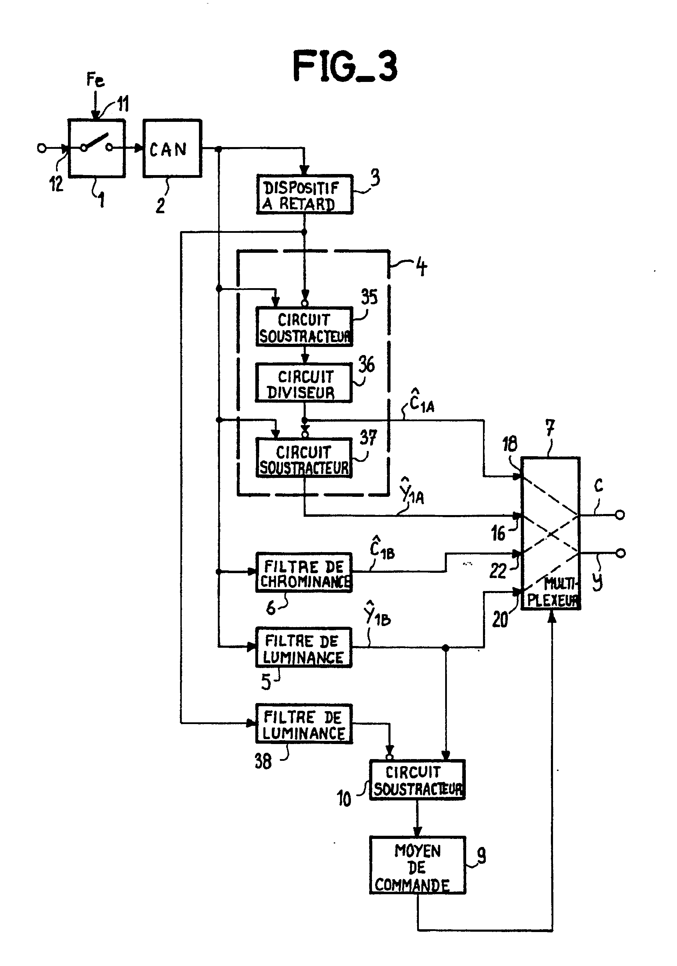

Un mode de réalisation du dispositif de calcul 4 et un mode de réalisation de l'analyseur de contexte spatio-temporel 10 et leurs liaisons avec les autres éléments du circuit de séparation représenté à la figure 1 sont représentés à la figure 2 où les éléments analogues de la figure 1 sont repérés avec les mêmes références. Le dispositif de calcul 4 qui est représenté sur la figure 2 à l'intérieur d'une ligne en pointillés comprend un circuit soustracteur 35, un circuit diviseur 36 par 2 et un circuit soustracteur 37.

Le circuit soustracteur 35 est relié par une première entrée à la sortie du dispositif à retard 3 et par une deuxième entrée à la sortie du convertisseur analogique numérique 2. La sortie du circuit soustracteur 35 est reliée d'une part, à l'entrée du circuit diviseur 36 qui fournit le signal de chrominance $\hat{C}_{1A}$ pour l'appliquer sur l'entrée 18 du multiplexeur 7 et d'autre part, sur une première entrée d'opérande du circuit soustracteur 37. Le circuit soustracteur 37 est relié par sa deuxième entrée d'opérande à la sortie du convertisseur analogique numérique 2 et fournit sur sa sortie une estimation du signal de luminance $\hat{Y}_{1A}$ pour l'appliquer sur l'entrée 16 du multiplexeur 7.

En désignant comme précédemment par $Y_0$, $C_0$ et $S_0$ les signaux de luminance, de chrominance et composite le long de la ligne n-312 et par $Y_1$, $C_1$ et $S_1$ les mêmes signaux le long de la ligne n, le circuit soustracteur 35 et le circuit diviseur 36 par 2 effectuent le calcul de l'estimation du signal de chrominance en exécutant l'opération

$$\hat{C}_{1A} = \frac{1}{2}(S_1 - S_0) = \frac{1}{2}(C_1 - C_0) + \frac{1}{2}(Y_1 - Y_0)$$

et le circuit soustracteur 37 effectue le calcul de l'estimation du signal deluminance en exécutant l'opération

$$\hat{Y}_{1A} = S_1 - \hat{C}_{1A} = \frac{1}{2}(Y_1 + Y_0) + \frac{1}{2}(C_1 + C_0)$$

Comme sur la figure 1, le filtre de chrominance 6 fournit sur sa sortie 21 l'estimation du signal de chrominance $\hat{C}_{1B}$ pour l'appliquer sur l'entrée 22 du multiplexeur 7 et le filtre de luminance 5 fournit sur sa sortie 19 l'estimation du signal de luminance $\hat{Y}_{1B}$ pour l'appliquer sur l'entrée 20 du multiplexeur 7.

Le multiplexeur 7 délivre soit les signaux appliqués sur les entrées 16 et 18, soit les signaux appliqués sur les entrées 20 et 22 en fonction de l'état du signal de commande qui appliqué sur l'entrée de sélection 23.

Dans l'exemple de réalisation de la figure 2 la mémoire 8 est formée par une ligne à retard qui retarde le signal de luminance Y fourni par la sortie 26 du multiplexeur 7 d'une durée égale au temps de défilement d'une trame de 312 lignes dans les standards PAL ou SECAM et sa sortie est reliée à une première entrée de l'analyseur spatio-temporel 10 qui est constitué dans cet exemple d'un simple soustracteur. La deuxième entrée de l'analyseur spatio-temporel 10 est reliée à la sortie 19 du filtre de luminance 5.

L'analyseur spatio-temporel 10 fourni la différence entre l'estimation du signal de luminance $\hat{Y}_{1B}$ fourni par le filtre de luminance 5 et le signal de luminance (Y (n-312) obtenu à la sortie de la ligne à retard 8. Lorsque cette différence est faible les estimations $\hat{C}_{1A}$ et $\hat{Y}_{1A}$ fournies par le dispositif de calcul 4 sont validées par les moyens de commande 9 et le multiplexeur 7. Par contre lorsque la différence obtenue est importante, c'est-à-dire lorsque les amplitudes des signaux de luminance et de chrominance varient très fortement entre les lignes n-312 et n les moyens de commande 9 et le multiplexeur 7 valident les estimations $\hat{C}_{1B}$ et $\hat{Y}_{1B}$ fournies par les filtres de chrominance et de luminance 6 et 5.

Une troisième variante de réalisation du dispositif de séparation des signaux de luminance et de chrominance selon l'invention est représentée à la figure 3. Cette variante de réalisation diffère de celle de la figure 2 par le fait qu'elle ne comporte pas de dispositif à retard 8 et qu'elle comporte par contre en plus un filtre de luminance 38 couplé entre la première entrée du circuit soustracteur 10 et la sortie du dispositif à retard 3.

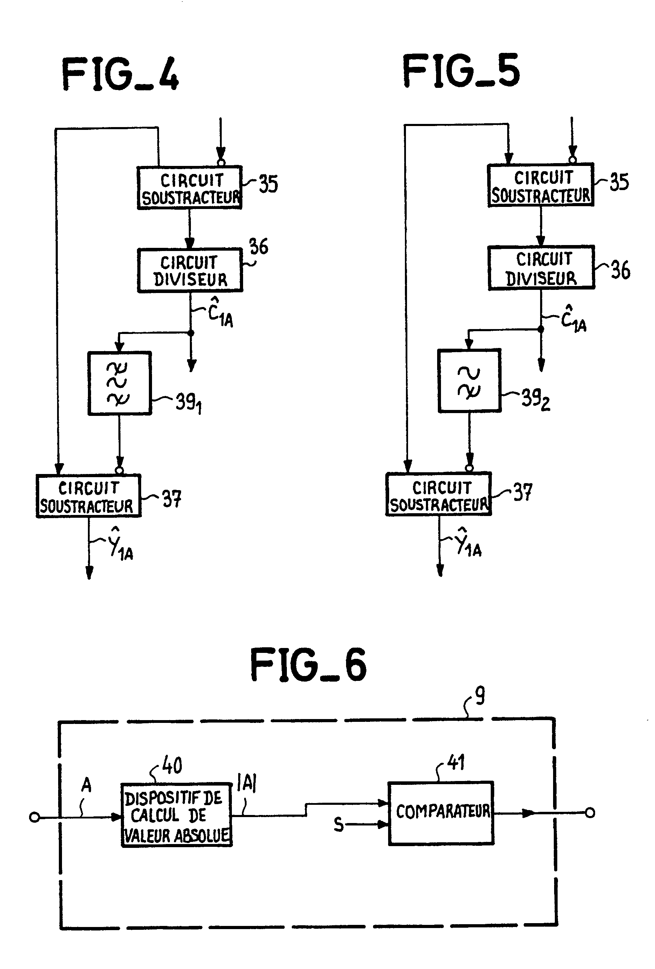

Le figures 4 et 5 illustrent des variantes de réalisations du dispotif de calcul 4. Dans le dispositif de calcul représenté à la figure 4, un filtre passe-bande $39_1$ est intercalé entre la sortie 1 du diviseur par deux 36 et la première entrée du circuit soustracteur 37.

Par contre dans l'exemple de la figure 5 c'est un filtre passe-haut $39_2$ qui est intercalé.

Enfin la figure 6 représente une réalisation plus détaillée du moyen de commande 9 des figures 2 et 3. Sur cette figure un dispositif 40 de calcul de valeur absolue reçoit sur son entrée une représentation binaire du nombre algébrique fourni par le soustracteur 10 et fournit en sortie la représentation binaire correspondante de la valeur absolue de ce nombre algébrique. Un comparateur 41 est relié par une première entrée à la sortie du dispositif de calcul de valeur absolu 40 et reçoit sur une deuxième entrée une représentation binaire d'un seuil S. Le dispositif de calcul 40 fournit sur sa sortie, en direction de l'entrée de commande du multiplexeur 7 des figures 2 et 3, un signal de commande résultant de la comparaison entre le seuil S et la valeur absolue du nombre binaire pour valider comme indiqué précédemment, soit les signaux de chrominance $\hat{C}_{1A}$ et de luminance $\hat{Y}_{1A}$ soit les signaux de chrominance $\hat{C}_{1B}$ et de luminance $\hat{Y}_{1B}$.

**Revendications**

1. Procédé de séparation de signaux de luminance et de chrominance d'un signal vidéo composite PAL ou SECAM caractérisé en ce qu'il consiste :
   - à échantillonner (1) et numériser (2) un signal vidéo composite PAL ou SECAM ;
   - à déterminer par une première voie de traitement (3, 4) un signal de luminance et un signal de chrominance à partir, de l'échantillon numérique du point courant de l'image, et d'un échantillon antérieur homologue au point courant situé sur la ligne dans la trame précédente qui est positionnée spatialement dans l'image immédiatement au-dessous de la ligne courante ;
   - à déterminer par une seconde voie de traitement (5, 6) un signal de luminance et un signal de chrominance en appliquant le signal composite numérique à l'entrée respectivement d'un filtre de luminance et d'un filtre de chrominance ;
   - à choisir (7) les signaux de luminance et de chrominance présents en sortie de la première voie de traitement ou de la seconde voie de traitement en fonction d'une analyse (10) du contexte spatio-temporel local du point par une détection de contour ou de mouvement faite par une analyse de luminance du point courant.

2. Dispositif de séparation de signaux de luminance et de chrominance d'un signal vidéo composite PAL ou SECAM caractérisé en ce qu'il comprend :
   - des moyens d'échantillonnage (1) et de numérisation (2) du signal vidéo composite analogique PAL ou SECAM ;

– un dispositif à retard (3) pour retarder de la durée d'environ une trame chaque échantillon numérique fourni pour les moyens d'échantillonnage (1) et de numérisation (2) ;

– une première voie d'extraction (3, 4) des signaux de luminance $Y_{1A}$ et de chrominance ($C_{1A}$) à partir, des échantillons numériques fournis par les moyens d'échantillonnage (1) et de numérisation (2) et des échantillons numériques fournis par le dispositif à retard (3) ;

– une seconde voie d'extraction (5, 6) des signaux de luminance et de chrominance comportant un filtre de luminance (5) et un filtre de chrominance (6) pour filtrer le signal vidéo composite numérique fourni par les moyens d'échantillonnnage (1) et de numérisation (2) ;

– un moyen de sélection (7) délivrant en sortie du dispositif de séparation les signaux élaborés par l'une ou l'autre des voies d'extraction (3, 4, 5, 6) des signaux de luminance et de chrominance ;

– et un moyen de commande (9) pour élaborer des signaux de commande du moyen de sélection (7) par une détection de contour ou de mouvement faite par une analyse de luminance du point courant.

3. Dispositif selon la revendication 2 caractérisé en ce que la première voie d'extraction (3, 4) comprend un dispositif de calcul (4) pour élaborer un signal de chrominance en effectuant la demi différence entre les signaux présents respectivement en entrée et en sortie du dispositif à retard (3).

4. Dispositif selon la revendication 3 caractérisé en ce que le signal de chrominance est filtré à l'intérieur du dispositif de calcul (4) par un filtre passe-bande ($39_1$) avant d'être soustrait du signal présent à l'entrée du dispositif à retard (3).

5. Dispositif selon la revendication 3 caractérisé en ce que le signal de chrominance est filtré par un filtre passe haut ($39_2$) avant d'être soustrait du signal présent à l'entrée du dispositif à retard (3).

6. Dispositif selon la revendication 2 caractérisé en ce que la commande du moyen de sélection (7) est obtenue d'une part, à partir du signal de luminance fourni en sortie du moyen de sélection (7) et retardé de la durée d'une trame, et d'autre part, à partir du signal de luminance fourni par la seconde voie d'extraction (6).

7. Dispositif selon la revendication 2, caractérisé en ce que la commande du moyen de sélection (7) est obtenue à partir d'une part, du signal de luminance fourni par la seconde voie d'extraction (6) et d'autre part, d'un signal de luminance obtenu par filtrage (38) du signal vidéo composite numérique obtenu en sortie des moyens de retard 3.

8. Dispositif selon l'une quelconque des revendications 6 et 7 caractérisé en ce que la commande du moyen de sélection (7) est obtenue à partir d'un signal de test résultant de la différence de deux signaux de luminance.

9. Dispositif selon la revendication 8, caractérisé en ce que la commande du moyen de sélection (7) est effectuée par calcul de la valeur absolue (40) du nombre représenté par le signal de test et par comparaison (41) de cette valeur absolue à un seuil (S).

## Ansprüche

1. Verfahren zur Trennung der Helligkeits- und der Farbsignale eines vollständigen PAL- oder SECAM-Videosignals, dadurch gekennzeichnet, daß es aus folgenden Schritten besteht :

– Abtastung (1) und Digitalisierung eines vollständigen PAL-oder SECAM-Videosignals,

– Ermittlung eines Helligkeitssignals und eines Farbsignals aus der digitalen Tastprobe des laufenden Bildpunktes und einer früheren Tastprobe, die dem laufenden Bildpunkt auf derjenigen Zeile des vorhergehenden Halbbildes, die im Bild räumlich unmittelbar unter der laufenden Zeile liegt, durch einen ersten Verarbeitungskanal (3, 4),

– Ermittlung eines Helligkeitssignals und eines Farbsignals durch Anlegen des vollständigen digitalen Signals an den Eingang eines Helligkeits- bzw. eines Farbfilters, durch einen zweiten Verarbeitungskanal (5, 6),

– Auswahl (7) der Helligkeitssignale und der Farbsignale, die am Ausgang des ersten Verarbeitungskanals oder des zweiten Verarbeitungskanals vorliegen, in Abhängigkeit von einer Analyse (10) des lokalen räumlich-zeitlichen Zusammenhangs des Bildpunkts durch Erfassen der Kontur oder der Bewegung des Bildpunkts mit Hilfe einer Helligkeitsanalyse des laufenden Bildpunkts.

2. Einrichtung zur Trennung der Helligkeits- und der Farbsignale eines vollständigen PAL- oder SECAM-Videosignals, dadurch gekennzeichnet, daß sie folgende Komponenten aufweist :

– Mittel zum Abtasten (1) und Digitalisieren (2) des analogen vollständigen PAL- oder SECAM-Videosignals,

– eine Verzögerungseinrichtung (3) zum Verzögern jeder digitalen Tastprobe, die von den Abtast- (1) und Digitalisierungsmitteln (2) geliefert wird, um ungefähr die Dauer eines Halbbildrahmens

– einen ersten kanal (3, 4) zur Extraktion der Helligkeitssignale ($Y_{1A}$) und der Farbsignale ($C_{1A}$) aus den digitalen Tastproben, die von den Abtast- (1) und Digitalisierungsmitteln (2) geliefert werden, und aus den digitalen Tastproben, die von der Verzögerungseinrichtung (3) geliefert werden,
 – einen zweiten kanal (5, 6) zur Extraktion der Helligkeits-und der Farbsignale, der ein Helligkeitsfilter (5) und ein Farbfilter (6) zum Filtern des von den Abtast- (1) und Digitalisierungsmitteln (2) gelieferten vollständigen Videosignals aufweist,
 – ein Auswahlmittel (7), das am Ausgang der Trenneinrichtung, die vom einen oder vom anderen kanal (3, 4, 5, 6) zur Extraktion der Helligkeits- und Farbsignale erzeugten Signale liefert,
 – und ein Ansteuerungsmittel (9) zum Erzeugen von Signalen zur Kontrolle des Auswahlmittels (7) durch Erfassen der kontur oder der Bewegung des Bildpunkts mit Hilfe einer Helligkeitsanalyse des laufenden Bildpunkts.

3. Einrichtung nach Anspruch 2, dadurch gekennzeichnet, daß der erste Extraktionskanal (3, 4) eine Recheneinrichtung (4) zur Erzeugung eines Farbsignals durch Bilden der halben Differenz zwischen den am Eingang bzw. am Ausgang der Verzögerungseinrichtung (3) anstehenden Signale aufweist.

4. Einrichtung nach Anspruch 3, dadurch gekennzeichnet, daß das Farbsignal innerhalb der Recheneinrichtung (4) durch ein Bandpaßfilter ($39_1$) gefiltert wird, ehe es von dem am Eingang der Verzögerungseinrichtung (3) anstehenden Signal subtrahiert wird.

5. Einrichtung nach Anspruch 3, dadurch gekennzeichnet, daß das Farbsignal durch ein Hochpaßfilter ($39_2$) gefiltert wird, ehe es von dem am Eingang der Verzögerungseinrichtung (3) anstehenden Signale subtrahiert wird.

6. Einrichtung nach Anspruch 2, dadurch gekennzeichnet, daß die Steuerung des Auswahlmittels (7) einerseits vom Helligkeitssignal, das am Ausgang des Auswahlmittels (7) vorliegt und um die Dauer eines Halbbildrahmens verzögert wurde, und andererseits vom aus dem vom zweiten Extraktionskanal (6) gelieferten Farbsignal abgeleitet wird.

7. Einrichtung nach Anspruch 2, dadurch gekennzeichnet, daß die Steuerung des Auswahlmittels (7) einerseits vom Helligkeitssignal, das vom zweiten Extraktionskanal (6) geliefert wurde, und andererseits von einem Helligkeitssignal abgeleitet wird, das durch Filterung (38) des digitalen, am Ausgang der Verzögerungsmittel (3) erhaltenen vollständigen Videosignals gewonnen wird.

8. Einrichtung nach einem beliebigen der Ansprüche 6 und 7, dadurch gekennzeichnet, daß die Steuerung des Auswahlmittels (7) aus einem Prüfsignal abgeleitet wird, das aus der Differenz zweier Helligkeitssignale resultiert.

9. Einrichtung nach Anspruch 8, dadurch gekennzeichnet, daß die Steuerung des Auswahlmittels (7) durch Berechnung des Absolutwerts (40) der durch das Prüfsignal dargestellten Zahl und durch Vergleichen (41) dieses Absolutwerts mit einem Schwellwert (S) herbeigeführt wird.

## Claims

1. A method for separating luminance and chrominance signals from a PAL or SECAM composite video signal, characterized in that it consists in :
 – sampling (1) and digitizing (2) a PAL or SECAM composite signal,
 – determining in a first processor channel (3, 4) a luminance signal and a chrominance signal from the digital sample of the current image point and from an earlier sample homologous to current point and situated on the line in the preceding frame, which is spatially positioned in the image immediately under the current line,
 – determining in a second processor channel (5, 6) a luminance signal and a chrominance signal by way of applying the digital composite signal to the inputs of a luminance filter and of a chrominance filter respectively,
 – selecting (7) the luminance signals and the chrominance signals present at the output of the first processor channel or of the second processor channel as a function of the analysis (10) of the spatial-temporal local context of the point by detecting the contour or the movement of the current point in performing a luminance analysis.

2. A device for separating luminance and chrominance signals from a PAL or a SECAM composite video signal, characterized in that it comprises :
 – means for sampling (1) and digitizing (2) the PAL or SECAM analog composite video signal,
 – a delay device (3) adapted to delay, for the duration of about one frame, each supplied digital sample intended for the sampling means (1) and the digitizing means (2),
 – a first channel (3, 4) for extracting the luminance signals ($Y_{1A}$) and the chrominance signals ($C_{1A}$) from the digital samples delivered by the sampling means (1) and the digitizing means (2), and from the digital samples delivered by the delay device (3),
 – a second channel ((5, 6) for extracting the luminance signals and the chrominance signals, comprising a luminance filter (5) and a chrominance filter (6) for filtering the digital composite video signal delivered by the sampling means (1) and the digitizing means (2),
 – a selection means (7) adapted to deliver at the output of the separation device the signals generated by the one or by the other of the channels (3, 4, 5, 6) for extracting the luminance and the chrominance signals,
 – and an instruction means (9) for generating control signals for the selection means (7) by way of detecting the contour or the movement of the current point in performing a luminance analysis.

3. A device according to claim 2, characterized in that the first extraction channel (3, 4) comprises a computing device (4) for generating a chrominance signal by way of elaborating the half-difference between the signals present respectively at the input and at the output of the delay device (3).

4. A device according to claim 3, characterized in that the chrominance signal is filtered in the computing device (4) by a band-pass filter ($39_1$) prior to being substracted from the signal present at the input of the delay device (3).

5. A device according to claim 3, characterized in that the chrominance signal is filtered by a high-pass filter ($39_2$) prior to being substracted from the signal present at the input of the delay device (3).

6. A device according to claim 2, characterized in that the control of the selection device (7) is obtained on the one hand from the luminance signal provided at the output of the selection means (7) and delayed for the duration of one frame, and on the other hand from the luminance signal provided by the second extraction channel (6).

7. A device according to claim 2, characterized in that the control of the selection means (7) is obtained on the one hand from the luminance signal provided by the second extraction channel (6), and on the other hand from the luminance signal obtained by filtering (38) the digital composite video signal available at the output of the delay means (3).

8. A device according to any one of the claims 6 and 7, characterized in that the control of the selection means (7) is obtained from a test signal resulting from the difference between the two luminance signals.

9. A device according to claim 8, characterized in that the control of the selection means (7) is obtained by computing the absolute value (40) of the number represented by the test signal, and by comparison (41) of said absolute value with a threshold (S).

FIG_1

FIG_2

# FIG_3

# FIG_4

CIRCUIT SOUSTRACTEUR — 35

CIRCUIT DIVISEUR — 36

$\hat{C}_{1A}$

$\approx\approx$ — 39₁

CIRCUIT SOUSTRACTEUR — 37

$\hat{y}_{1A}$

# FIG_5

CIRCUIT SOUSTRACTEUR — 35

CIRCUIT DIVISEUR — 36

$\hat{C}_{1A}$

$\approx$ — 39₂

CIRCUIT SOUSTRACTEUR — 37

$\hat{y}_{1A}$

# FIG_6

9

A

40

DISPOSITIF DE CALCUL DE VALEUR ABSOLUE

|A|

S

41

COMPARATEUR